Europäisches Patentamt

(19) European Patent Office

Office européen des brevets

(11) Numéro de publication : **0 102 898**
**B1**

(12) **FASCICULE DE BREVET EUROPÉEN**

(45) Date de publication du fascicule du brevet :
03.12.86

(21) Numéro de dépôt : 83401705.5

(22) Date de dépôt : 24.08.83

(51) Int. Cl.⁴ : **F 16 B 39/38**, F 16 B 39/10,
B 25 B 13/06

(54) **Dispositif d'écrou à verrouillage positif automatique.**

(30) Priorité : 30.08.82 FR 8214808

(43) Date de publication de la demande :
14.03.84 Bulletin 84/11

(45) Mention de la délivrance du brevet :
03.12.86 Bulletin 86/49

(84) Etats contractants désignés :
AT BE CH DE GB IT LI LU NL SE

(56) Documents cités :
FR-A- 862 590
FR-A- 1 225 771
FR-A- 2 358 581
US-A- 3 942 570
US-A- 4 328 720
V.H. Laughner and A.D. Hargan: "Handbook of Fastening and Joining of Metal Parts", première édition
1956, Mc-Graw-Hill Book Co. Inc. New-York-Toronto-
London, pages 153-155, figure C, page 155

(73) Titulaire : SHUR-LOK INTERNATIONAL S.A. Société
dite:
Rue du Midi 7-9
B-4822 Petit-Rechain (BE)

(72) Inventeur : Dessouroux, Alexis Albert Jean Francis
23 Avenue Amédée Hesse
B-4880 Spa (BE)

(74) Mandataire : Moncheny, Michel et al
c/o Cabinet Lavoix 2 Place d'Estienne d'Orves
F-75441 Paris Cedex 09 (FR)

## Description

La présente invention est relative à un dispositif d'écrou à verrouillage positif automatique.

On connaît déjà de nombreux types de dispositifs d'écrou à verrouillage positif dont l'exemple le plus classique est l'écrou crénelé associé à une goupille disposée à travers un trou de l'axe sur lequel est vissé l'écrou et s'étendant à la fois dans ce trou et dans deux créneaux de l'écrou.

Il est bien connu que les dispositifs de ce type présentent de nombreux inconvénients dont l'un des plus importants est le fait que le serrage de l'écrou est commandé par la venue en position favorable de deux créneaux diamétralement opposés de l'écrou dans un trou de l'axe sur lequel il est vissé.

En outre, ce dispositif n'est utilisable qu'avec des axes d'un certain diamètre au-dessous duquel la présence du trou affaiblirait gravement la résistance.

On connaît par ailleurs, d'après l'ouvrage « Handbook of Fastening and Joining of Metal Parts » de V. H. Laughner et A. D. Hargan, première édition 1956, Mc Graw-Hill Book Co. Inc., New York, Toronto, London, pages 153 et 155, un dispositif d'écrou à verrouillage positif automatique vissé sur un arbre comprenant un élément formant frein, pour être immobilisé en rotation sur cet arbre.

L'élément formant frein représenté à la Fig. C de ce document est constitué par un doigt coudé porté par l'écrou et prenant appui par son extrémité libre dans le filetage sur lequel l'écrou est vissé.

Le freinage de l'écrou ainsi obtenu est un freinage ponctuel dont l'efficacité risque d'être compromise sous l'effet de vibrations.

Dans FR-A-2 358 581, on décrit un dispositif de blocage d'un écrou sur un organe fileté du type dans lequel une rondelle-frein assure le blocage de l'écrou.

On a également décrit dans US-A-4 328 720, un outil de pose d'un écrou dans lequel les moyens de retenue sont constitués par un jonc élastique fendu disposé dans une gorge ménagée à l'extérieur d'une douille de réception de l'écrou et faisant saillie intérieurement dans les sommets des pans coupés de la douille.

L'invention vise à créer un dispositif d'écrou à verrouillage positif automatique qui allie une relative simplicité de construction vis-à-vis des dispositifs connus à des propriétés de verrouillage positif efficace et précis.

Elle a donc pour objet un dispositif d'écrou à verrouillage positif automatique vissé sur un arbre comprenant un élément formant frein pour être immobilisé en rotation sur cet arbre, caractérisé en ce que l'élément formant frein est une bague filetée, prisonnière dans un chambrage de l'écrou avec lequel elle est solidaire en rotation et mobile axialement dans ledit chambrage entre une première position dans laquelle son filetage est en phase avec celui de l'écrou et une seconde position dans laquelle lesdits filetages ne sont plus en phase, et comportant des moyens adaptés pour coopérer avec des moyens complémentaires de l'arbre lorsque les filetages de la bague et de l'écrou ne sont pas en phase.

Suivant une autre caractéristique de l'invention, ladite bague filetée formant frein est sollicitée élastiquement dans le chambrage de l'écrou dans ladite seconde position.

L'invention a également pour objet un outil comprenant une douille creuse délimitant un logement adapté pour recevoir l'écrou et des moyens pour retenir l'écrou élastiquement, pour la pose d'un dispositif d'écrou à verrouillage positif automatique tel que défini ci-dessus, caractérisé en ce qu'il comprend des moyens pour maintenir la bague dans ladite première position, au fond du chambrage à l'encontre de l'action dudit second jonc lorsque l'écrou est retenu dans la douille.

L'invention sera mieux comprise à l'aide de la description qui va suivre, donnée uniquement à titre d'exemple et faite en se référant aux dessins annexés, sur lesquels :

la Figure 1 est une vue en élévation latérale avec arrachement partiel d'un dispositif d'écrou à verrouillage positif automatique suivant l'invention ;

la Figure 2 est une vue en élévation latérale d'arrière ;

la Figure 3 est une vue en élévation latérale avec arrachement partiel d'un outil suivant l'invention pour la pose d'un ensemble d'écrou à verrouillage positif automatique suivant l'invention ;

la Figure 4 est une vue en élévation latérale avec arrachement partiel montrant la pose d'un dispositif suivant l'invention ;

la Figure 5 est une vue partielle à échelle considérablement agrandie montrant la bague filetée formant frein immobilisée en rotation sur un arbre sur lequel est vissé l'écrou ; et

la Figure 6 est une vue en coupe suivant la ligne 6-6 de la Fig. 3.

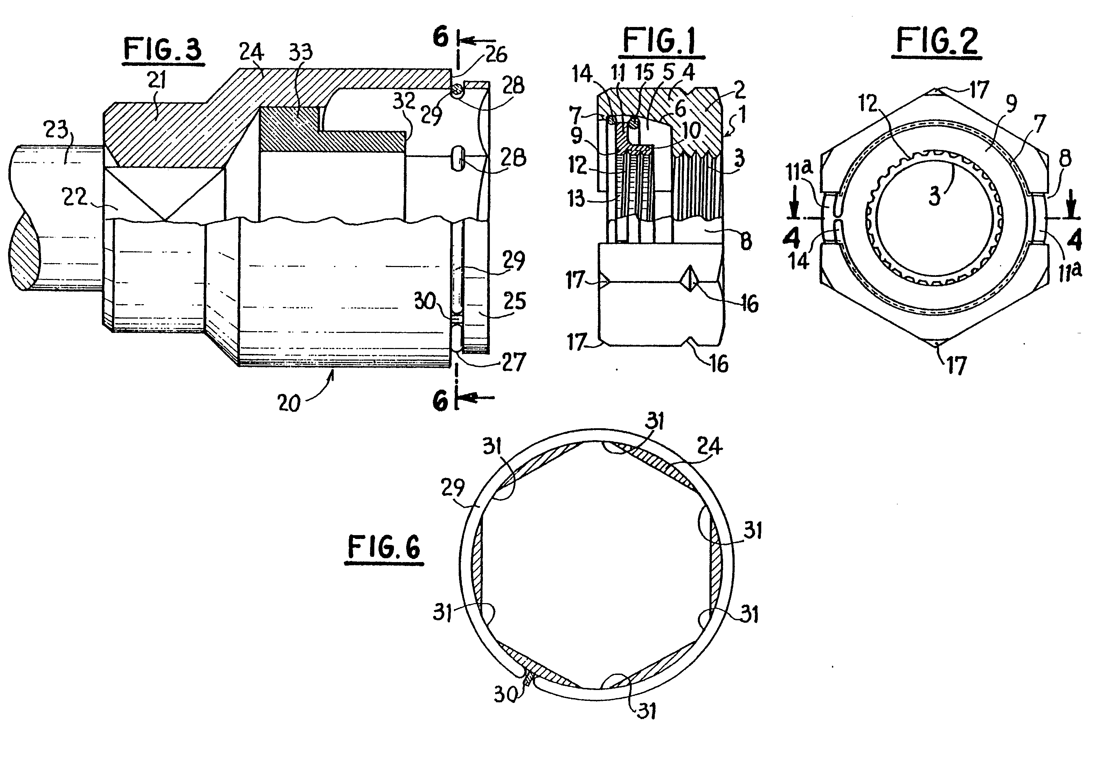

Le dispositif d'écrou à verrouillage positif automatique suivant l'invention, désigné dans son ensemble par la référence 1 est représenté à la Fig. 1 avec arrachement partiel. Il comprend un écrou proprement dit ayant un corps massif 2 présentant un alésage central ayant un filetage interne 3 et à partir duquel s'étend vers l'arrière une jupe 4 délimitant un chambrage 5 ayant une paroi interne tronconique 6, divergente se terminant par un petit rebord radial 7 s'étendant vers l'intérieur et délimitant un épaulement avec la paroi 6.

L'écrou comporte en outre dans sa surface externe deux fraisages s'étendant axialement et délimitant des rainures 8 diamétralement opposées dans un but qui apparaîtra dans la suite. Ces rainures sont prolongées dans la totalité de l'épaisseur de la jupe 4, depuis sa jonction avec le corps 2.

A l'intérieur du chambrage 5 est disposée une bague 9 formant frein qui comprend un corps cylindrique 10 présentant une collerette radiale 11 s'étendant vers l'extérieur et dont le diamètre est au plus égal au diamètre de l'ouverture délimitée à l'arrière de l'écrou par le rebord 7 précité.

La bague 9 comporte un filetage interne 12 de mêmes cotes que le filetage 3 de l'écrou 2 à la seule différence que ses filets présentent des sommets tronqués comme cela est représenté à grande échelle à la Fig. 5.

Le filetage interne 12 présente en outre des cannelures axiales 13.

La bague 9 est retenue à l'intérieur du chambrage 5 au moyen d'un jonc élastique fendu 14 dont la section est légèrement supérieure à la hauteur de l'épaulement délimité par le rebord 7 avec la paroi tronconique 6, ce jonc faisant obstacle à la sortie de la bague 9 du chambrage 5.

Entre la collerette 11 de la bague 9 et le fond du chambrage 5 est disposé un second jonc élastique fendu 15 ayant une section nettement supérieure à celle du jonc 14 afin de former un ressort. La fente de ce jonc est suffisante pour permettre de l'introduire sous contrainte dans le chambrage 5 avant la mise en place de la bague 9.

On comprend que grâce au taux d'élasticité du jonc 15, celui-ci, introduit sous contrainte, tend à s'écarter et glisse sur la surface tronconique 6 en repoussant la bague 9 vers l'ouverture délimitée par le rebord 7, sans que celle-ci puisse s'échapper et se trouvant donc maintenue contre le jonc 14.

L'écrou comprend enfin des encoches 16 ménagées dans chacun des sommets entre ses pans coupés, ces encoches étant formées de préférence à la hauteur du corps massif 2. L'extrémité de chacune de ces arêtes, à l'extrémité arrière de l'écrou, est en outre abattue comme représenté en 17 dans un but qui apparaîtra dans la suite.

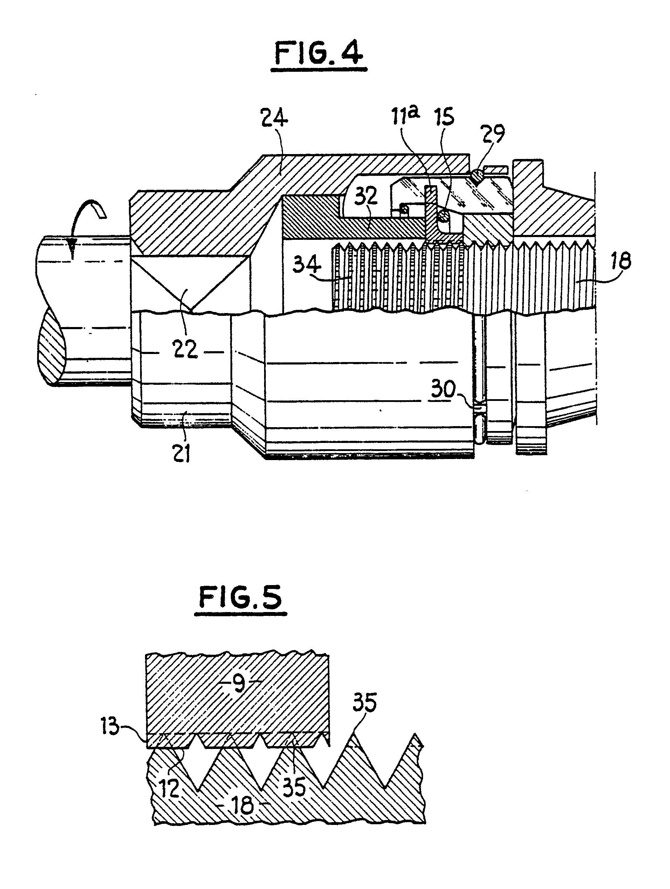

On comprend en considérant la Fig. 1 que la bague 9 peut se déplacer à l'intérieur du chambrage 5, la longueur de sa partie 10 et le diamètre de sa collerette 11 lui permettant de venir reposer contre le fond du chambrage lorsqu'on exerce sur la bague une pression suffisante pour vaincre la résistance élastique opposée par le jonc 15. Lorsque la bague 9 se trouve ainsi dans cette position, son filetage se trouve alors en phase avec le filetage 3 de l'écrou et le dispositif se comporte alors comme un écrou monobloc et peut alors être vissé comme un ensemble sur un arbre 18, comme représenté à la Fig. 4.

Pour pouvoir visser ainsi le dispositif 1 comme un écrou unitaire sur l'arbre 18, il est prévu, suivant l'invention, un outil qui est représenté aux Fig. 3 et 4 et qui est désigné dans son ensemble par la référence 20.

Cet outil est constitué par une douille creuse cylindrique ayant une partie arrière 21 dans laquelle est ménagé un trou 22 de section carrée destiné à recevoir la tête carrée d'un organe d'entraînement 23.

La douille comporte une partie élargie opposée 24 présentant intérieurement un chambrage complémentaire de la forme de l'écrou 2 du dispositif 1, et qui dans cet exemple est hexagonal. La paroi de la partie 24 présente une portion d'extrémité 25 de diamètre extérieur réduit et délimitant avec la partie 24 un épaulement 26 au pied duquel est creusée une gorge 27 dont la profondeur est choisie de manière à déboucher à l'intérieur du chambrage de la douille comme représenté en 28 (Fig. 3) au droit des arêtes correspondant à celles de l'écrou. Dans la gorge 27 est disposé un jonc élastique fendu 29 ayant un appendice 30 en saillie à l'extérieur à travers un trou percé dans le fond de la gorge 27. Cet appendice 30 a pour but de retenir en rotation le jonc 29 dans la gorge.

On comprend que grâce aux trous 28, le jonc 29 fait légèrement saillie à l'intérieur de la partie 24 de la douille au droit de chacun des angles dièdres formés par le chambrage hexagonal de celle-ci comme représenté en 31 à la Fig. 6.

Dans le fond du chambrage de la partie 24 de la douille est formée une partie de diamètre réduit dans laquelle est emmanchée à force une bague cylindrique 32 ayant une partie 33 plus épaisse ajustée dans le fond du chambrage, la partie cylindrique 32 s'étendant coaxialement à la partie 24 et ayant un diamètre interne supérieur à celui du filetage 3 de l'écrou.

On comprend en considérant les Fig. 1 et 3 que lorsqu'on présente l'outil 20 sur l'extrémité arrière de l'écrou 2, les extrémités 17 coupées des arêtes de l'écrou se trouvent alors en face des parties 31 en saillie vers l'intérieur du jonc 29, ces extrémités 17 formant des rampes de came écartant élastiquement le jonc 29.

En se reportant à la Fig. 4, on a complètement enfoncé la douille sur l'écrou jusqu'au moment où le jonc 29 est venu s'enclencher brusquement élastiquement dans les encoches 16 du dispositif 1, retenant ainsi celui-ci dans l'outil 20.

On comprend également qu'en enfonçant la douille sur l'écrou, la partie cylindrique 32 ayant pris appui sur la face arrière de la bague 9 a repoussé celle-ci dans le fond du chambrage 5 de l'écrou à l'encontre de la résistance élastique du jonc 15, amenant ainsi le filetage 12 de la bague 9 en phase avec le filetage 3 de l'écrou.

On peut alors visser le dispositif comme un écrou unitaire sur l'arbre 18.

Lorsque le couple de serrage désiré a été appliqué au dispositif 1, on tire la douille en arrière de façon que les côtés inclinés des encoches 16 agissant à la façon d'une rampe de came écartent élastiquement le jonc 29 pour libérer le dispositif.

L'outil étant retiré, le jonc élastique 15 tend à repousser la collerette 11 de la bague 9 en arrière vers l'extérieur.

Les cannelures 13 de la bague 9 dont les filets sont tronqués coopèrent alors avec des cannelures correspondantes 34 ménagées sur les sommets des filets de l'arbre 18 dans la partie d'extrémité de celui-ci comme représenté à la Fig. 4. L'écartement des cannelures 34 et des cannelures 12 étant correspondant et relativement faible, la force élastique exercée par le jonc 15 suffit à faire glisser la bague 9 de façon que ses cannelures viennent en prise avec les cannelures correspondantes complémentaires de l'arbre 18, à la suite d'un très faible déplacement angulaire du dispositif sur l'arbre 18 n'affectant aucunement le couple de serrage initialement appliqué à l'écrou pour amener les cannelures 13 en alignement avec les cannelures 34.

La bague 9 qui est d'une part solidaire de la jupe 4 du dispositif par ses oreilles 11a engagées dans les rainures 8 est d'autre part également solidaire de l'arbre 18 par la coopération des cannelures 13 et 34, immobilisant ainsi positivement l'écrou 2.

Dans la seconde position de la bague 9, ou position de verrouillage à l'extrémité arrière du chambrage 5, le filetage 12 de la bague n'est plus en phase avec le filetage 3 de l'écrou. Cet écrou peut malgré son verrouillage positif être extrêmement facilement retiré sans aucune usure de l'ensemble du dispositif.

En effet, il suffit de réengager l'outil 20 sur l'écrou 2 jusqu'à ce que le jonc élastique 29 soit venu s'enclencher élastiquement dans les encoches 16 de l'écrou, ramenant ainsi la bague 9 en arrière au fond du chambrage 5 avec son filetage 12 en phase avec celui de l'écrou 2 et dégageant par conséquent les sommets 35 des filets de l'arbre 18 des cannelures 13 de la bague 9 qui étaient, dans la position de verrouillage de la bague, situés axialement entre les filets du filetage 12 comme représenté à la Fig. 5. On peut alors dévisser immédiatement l'ensemble du dispositif, celui-ci restant retenu dans l'outil par l'action élastique du jonc 29 et pouvant ensuite être remis en place, soit dans la même position, soit sur un autre point de la longueur de l'arbre 18 dans une nouvelle position dans laquelle le dispositif peut être verrouillé positivement avec la même facilité.

On comprend que le dispositif et l'outil suivant l'invention permettent d'obtenir instantanément un verrouillage positif d'un écrou auquel a été appliqué initialement un couple donné avec une grande précision.

Ce dispositif peut bien entendu être démonté et remis en place de nombreuses fois sans aucune usure.

**Revendications**

1. Dispositif d'écrou à verrouillage positif automatique vissé sur un arbre (18) comprenant un élément formant frein pour être immobilisé en rotation sur cet arbre, caractérisé en ce que l'élément formant frein est une bague filetée (9), prisonnière dans un chambrage (5) de l'écrou (2) avec lequel elle est solidaire en rotation et mobile axialement dans ledit chambrage entre une première position dans laquelle son filetage (12) est en phase avec celui (3) de l'écrou et une seconde position dans laquelle lesdits filetages ne sont plus en phase, et comportant des moyens (3) adaptés pour coopérer avec des moyens complémentaires (34) de l'arbre (18) lorsque les filetages de la bague (9) et de l'écrou (2) ne sont pas en phase.

2. Dispositif suivant la revendication 1, caractérisé en ce que ladite bague (9) formant frein comporte deux oreilles (11a) s'étendant radialement vers l'extérieur dans deux rainures complémentaires (8) de l'écrou (2).

3. Dispositif suivant la revendication 1, caractérisé en ce que le chambrage de l'écrou (2) présente une forme tronconique divergente vers l'extérieur ayant un diamètre supérieur à celui de ladite bague (9) sans lesdites oreilles (11a) et un rebord radial (7) dirigé vers l'intérieur ayant un diamètre à peu près égal à celui de la bague (9), sans les oreilles (11a).

4. Dispositif suivant la revendication 3, caractérisé en ce que ladite bague comporte un corps cylindrique (10) fileté intérieurement et une collerette radiale (11) ayant un diamètre à peu près égal à celui dudit rebord (7) et sur laquelle font saillies lesdites oreilles (11a).

5. Dispositif suivant la revendication 4, caractérisé en ce que lesdits moyens de la bague (9) qui coopèrent avec des moyens complémentaires de l'arbre (18) sont constitués par un filetage (12) de la bague à sommets tronqués et par des cannelures axiales (34) complémentaires.

6. Dispositif suivant la revendication 4, caractérisé en ce que ladite bague (9) est retenue prisonnière dans ledit chambrage (5) au moyen d'un jonc élastique (14) disposé entre ladite collerette de la bague et ledit rebord radial (7) du chambrage et ayant une section de diamètre supérieur à la hauteur dudit rebord, et en ce qu'il comporte un second jonc élastique fendu (15) disposé en arrière de la bague, entre la collerette (11) de celle-ci et le fond dudit chambrage conique, et sollicitant élastiquement la bague (9) vers l'extérieur vers ledit rebord (7).

7. Dispositif suivant la revendication 6, caractérisé en ce que le filetage (12) de la bague est en phase avec celui de l'écrou (2) lorsque ladite bague est repoussée en contact avec le fond dudit chambrage (5), à l'encontre de l'action élastique dudit second jonc élastique (15).

8. Dispositif suivant l'une quelconque des revendications 1 à 7, caractérisé en ce que ledit écrou comporte une encoche (16) dans chacun des sommets entre ses pans coupés et le bord arrière de l'écrou, au niveau dudit rebord (7) est légèrement chanfreiné aux extrémités (17) des arêtes de l'écrou.

9. Outil comprenant une douille creuse (20) délimitant un logement adapté pour recevoir l'écrou (2) et des moyens (29) pour retenir l'écrou élastiquement, pour la pose d'un dispositif d'écrou à verrouillage positif automatique tel que défini suivant l'une quelconque des revendications 1 à 8, caractérisé en ce qu'il comprend des moyens (32) pour maintenir la bague (9) dans ladite première position, au fond du chambrage (5) à l'encontre de l'action dudit second jonc (15) lorsque l'écrou est retenu dans la douille.

10. Outil suivant la revendication 9, caractérisé en ce que lesdits moyens de retenue sont constitués par un jonc élastique fendu (29) disposé dans une gorge (28) ménagée à l'extérieur de la douille et faisant saillie intérieurement dans les sommets (31) des pans coupés de la douille.

11. Outil suivant la revendication 9, caractérisé en ce que lesdits moyens pour maintenir la bague (9) dans ladite première position au fond du chambrage sont constitués par un bossage cylindrique (32) en saillie au fond de la douille (20) et coaxial à celle-ci.

## Claims

1. A nut device having an automatic positive locking, screwed on a shaft (18) comprising an element constituting a brake so as to be prevented from rotating on this shaft, characterised in that the element constituting a brake is a screw-threaded collar (9) trapped in a cavity (5) on a nut (2) with which it is connected to rotate and which is axially movable in said cavity between a first position in which its screwthread (12) is in phase with that (3) of the nut and a second position in which said screwthreads are no longer in phase, and including means (3) for cooperating with complementary means (34) of the shaft (18) when the screwthreads of the collar (9) and of the nut (2) are not in phase.

2. A device according to claim 1, characterised in that said collar (9) constituting a brake has two radially outwardly extending ears (11a) engaged in two complementary grooves (8) of the nut (2).

3. A device according to claim 1, characterised in that the cavity of the nut (2) has an outwardly divergent frustoconical shape having a diameter greater than that of said collar (9) without said ears (11a) and an inwardly extending radial flange (7) having a diameter which is roughly equal to that of the collar (9) without the ears (11a).

4. A device according to claim 3, characterised in that said collar has a cylindrical body (10) which includes an internal screwthread and a radial flange (11) having a diameter roughly equal to that of said flange (7) and from which said ears (11a) project.

5. A device according to claim 4, characterised in that said means of the collar (9) which cooperate with complementary means of the shaft (18) are constituted by a screwthread (12) of the collar having truncated crests and by complementary axial splines (34).

6. A device according to claim 4, characterised in that said collar (9) is retained trapped in said cavity (5) by a resilient ring (14) which is disposed between said flange of the collar and said radial flange (7) of the cavity and has a section whose diameter is greater than the height of said flange, there being provided a split second resilient ring (15) disposed at the rear of the collar, between the flange (11) of the latter and the inner end of said frustoconical cavity and resiliently biasing the collar (9) outwardly toward said flange (7) of the cavity.

7. A device according to claim 6, characterised in that the screwthread (12) of the collar is in phase with that of the nut (2) when said collar is urged into contact with the inner end of said cavity (5) in opposition to the resilient action of said second resilient ring (15).

8. A device according to any one of the claims 1 to 7, characterised in that said nut includes a recess (16) in each of the corners between its flat faces and the rear edge of the nut, in the region of said flange (7) of the cavity, is slightly chamfered at the ends (17) of the corners of the nut.

9. A tool comprising a hollow sleeve (20) defining a cavity adapted to receive the nut (2), means (29) for resiliently retaining the nut for mounting a nut device having an automatic locking such as defined according to any one of the claims 1 to 8, characterised in that it comprises means (32) for maintaining the collar (9) in said first position at the inner end of the cavity (5) in opposition to the action of said second ring (15) when the nut is retained in the sleeve.

10. A tool according to claim 9, characterised in that said retaining means are formed by a split resilient ring (29) disposed in a groove (28) formed outside the sleeve and inwardly projecting into the corners (31) of the flat faces of the sleeve.

11. A tool according to claim 9, characterised in that said means for maintaining the collar (9) in said first position at the inner end of the chamfer are formed by a cylindrical boss (32) which projects from the inner end of the sleeve (20) and is coaxial with the latter.

## Patentansprüche

1. Mutter mit automatischer positiver Sicherung, welche auf eine Welle (18) aufschraubbar ist, mit einem eine Sicherung bildenden Element für die drehfeste Arretierung an dieser Welle, dadurch gekennzeichnet, daß das die Sicherung bildende Elemente ein Gewindering (9) ist, welcher sich in einer Aussparung (5) der Mutter (2) befindet, mit welcher der Gewindering (9) drehfest verbunden ist, daß der Gewindering axial in der Aussparung zwischen einer ersten Position, in welcher sein Gewinde (12) mit dem Gewinde (3) der Mutter phasengleich ist, und einer zweiten Position, in welcher die Gewinde nicht mehr phasengleich sing, beweglich ist, und daß der Gewindering Mittel (3) zum Zusammenwirken mit komplementären Mitteln (34) an der Welle (18) aufweist, wenn das Gewinde des Rings (9) und das der Mutter (2) nicht phasengleich sind.

2. Mutter nach Anspruch 1, dadurch gekennzeichnet, daß der eine Sicherung bildende Ring (9) zwei Ohren (11a) aufweist, welche sich radial nach außen in zwei komplementären Nuten (8) der Mutter (2) erstrecken.

3. Mutter nach Anspruch 1, dadurch gekennzeichnet, daß die Aussparung der Mutter (2) eine kegelstumpfförmig nach außen divergierende Form mit einem Durchmesser aufweist, welcher größer ist als der des Ringes (9) ohne die Ohren (11a), sowie eine radiale, nach innen gerichtete Krempe (7) mit einem Durchmesser, welcher in etwa dem des Ringes (9) ohne die Ohren (11a) entspricht.

4. Mutter nach Anspruch 3, dadurch gekennzeichnet, daß der Ring einen zylindrischen Körper (10) mit Innengewinde sowie einen radialen Kragen (11) mit einem Durchmesser aufweist, welcher in etwa gleich dem der Krempe (7) ist und über den die Ohren (11a) hinausragen.

5. Mutter nach Anspruch 4, dadurch gekennzeichnet, daß die mit den komplementären Mitteln der Welle (18) zusammenwirkenden Mittel des Rings (9) aus einem Gewinde (12) des Ringes mit kegelstumpfförmigen Scheiteln und aus komplementären axialen Riefen (34) bestehen.

6. Mutter nach Anspruch 4, dadurch gekennzeichnet, daß der Ring (9) in der Aussparung (5) mittels eines Federrings (14) gehalten ist, welcher zwischen dem Kragen des Ringes und der radialen Krempe (7) der Aussparung lagert und einen Querschnitt mit größerem Durchmesser als die Höhe der Krempe aufweist, und daß dieser einen zweiten Federring (15) hinter dem Ring zwischen dessen Kragen (11) und dem Boden der konischen Aussparung aufweist, welcher den Ring (9) elastisch nach außen in Richtung auf die Krempe (7) drückt.

7. Mutter nach Anspruch 6, dadurch gekennzeichnet, daß das Gewinde (12) des Rings mit der Mutter (2) phasengleich ist, wenn der Ring entgegen der elastischen Wirkung des zweiten Federrings (15) zurückgedrückt wird, um mit dem Boden der Aussparung (5) in Berührung zu gelangen.

8. Mutter nach einem der Ansprüche 1 bis 7, dadurch gekennzeichnet, daß diese jeweils in den Scheiteln zwischen ihren Schnittflächen eine Einkerbung (16) aufweist und daß die hintere Kante der Mutter in Höhe der Krempe (7) an den Enden (17) der Kanten der Mutter leicht abgeschrägt ist.

9. Werkzeug mit einer eine Ausnehmung aufweisenden hohlen Buchse (20) für die Aufnahme der Mutter (2) sowie mit Elementen (29) für die elastische Halterung der Mutter beim Anbringen derselben nach einem der Ansprüche 1 bis 8, dadurch gekennzeichnet, daß das Werkzeug Mittel (32) aufweist ; um den Ring (9) in der genannten ersten Position am Boden der Ausnehmung (5) entgegen der Wirkung des zweiten Federrings (15) zu halten, wenn sich die Mutter in der Buchse befindet.

10. Werkzeug nach Anspruch 9, dadurch gekennzeichnet, daß die Halteeinrichtungen für die elastische Halterung aus einem Federring (29) in einer Auskehlung (28) an der Außenseite der Buchse bestehen, welcher nach innen in die Scheitel (31) der Schnittflächen der Buchse hineinragt.

11. Werkzeug nach Anspruch 9, dadurch gekennzeichnet, daß die Mittel zum Halten des Ringes (9) in der ersten Position am Boden der Ausnehmung aus einem zylindrischen Vorsprung (32) bestehen, welcher vom Boden der Buchse (20) und koaxial zu dieser hervorsteht.

0 102 898

## FIG. 4

## FIG. 5